**Europäisches Patentamt**

**European Patent Office**

**Office européen des brevets**

(11) Numéro de publication : **0 329 519 B1**

(12)

# FASCICULE DE BREVET EUROPEEN

(45) Date de publication du fascicule du brevet :
**17.06.92 Bulletin 92/25**

(51) Int. Cl.⁵ : **C03C 17/00,** B05B 7/14,
C23C 24/08

(21) Numéro de dépôt : **89400323.5**

(22) Date de dépôt : **06.02.89**

(54) **Procédé et dispositif pour le revêtement d'un substrat tel qu'un ruban de verre, par un produit pulvérulent.**

(30) Priorité : **09.02.88 FR 8801533**

(43) Date de publication de la demande :
**23.08.89 Bulletin 89/34**

(45) Mention de la délivrance du brevet :
**17.06.92 Bulletin 92/25**

(84) Etats contractants désignés :
**AT BE CH DE ES FR GB IT LI LU NL SE**

(56) Documents cités :
**EP-A- 0 188 962**
**FR-A- 2 202 857**
**FR-A- 2 499 058**
**JAPANESE JOURNAL OF APPLIED PHYSICS,**
**vol. 24, no. 10, partie 2, octobre 1985, pages**
**L795-L797, Tokyo, JP; H. KOMIYAMA et**
**al.:"Rapid growth of AIN films by particle-**
**precipitation aided chemical vapor deposi-**
**tion"**

(73) Titulaire : **SAINT-GOBAIN VITRAGE**
**INTERNATIONAL**
**18, avenue d'Alsace**
**F-92400 Courbevoie (FR)**

(72) Inventeur : **Valere, Michel**
**7, Rue du Général de Gaulle**
**F-60150 Thourotte (FR)**
Inventeur : **Defort, Daniel**
**27, Rue Ferdinand**
**F-60610 La Croix Saint-Ouen (FR)**
Inventeur : **Sauvinet, Vincent**
**1, Rue Niville-Montagny Sainte Félicité**
**F-60950 Ermenonville (FR)**
Inventeur : **Fosset, Jean**
**22, Rue de Quennezil**
**F-60170 Saint Léger aux Bois (FR)**

(74) Mandataire : **Luziau, Nelly et al**
**Saint Gobain Recherche 39, Quai Lucien**
**Lefranc BP 135**
**F-93303 Aubervilliers Cédex (FR)**

## Description

La présente invention concerne le revêtement d'un substrat, notamment un ruban de verre par le procédé selon lequel une buse de distribution se terminant par une fente, projette sur ledit substrat chaud, un courant gazeux mélangé avec un produit pulvérulent qui se décompose à la chaleur et en particulier au contact du substrat chaud pour y former une couche mince de revêtement.

Des techniques de ce type sont par exemple utilisées, directement sur une ligne de fabrication de verre plat, pour revêtir le ruban de verre, peu après sa production, d'une couche d'oxyde métallique, résultant de la pyrolyse de composés métalliques et conférant au verre des qualités particulières, notamment de réflexion et/ou de transmission lumineuse et énergétique.

Des composés halogénés à l'état de poudre, tels que ceux décrits dans la publication de brevet européen 0 039 256, sont par exemple utilisés pour l'obtention d'une couche d'oxyde d'étain dopée au fluor, réfléchissant le rayonnement infrarouge.

Lorsqu'on projette sur le ruban de verre chaud, le courant gazeux dans lequel le produit pulvérulent est en suspension, une partie seulement de la poudre reste sur le verre où sous l'effet de la haute température, elle se décompose pour former la couche d'oxyde métallique souhaitée. Pour éviter de souiller l'installation et la couche formée, l'autre partie de la poudre est évacuée hors de la zone de revêtement par des dispositifs d'aspiration à fente placés à distance de la buse de projection et parallèles à ladite buse.

Pour augmenter la proportion de poudre captée par le ruban de verre chaud, il a été proposé dans le document de brevet européen publié sous le n° 188 962 de créer et maintenir entre la buse de distribution et les dispositifs d'aspiration au moins un tourbillon de gaz chargé de poudre. Par cette circulation rotative, les particules de poudre non captées par le substrat ne sont pas transportées directement vers le dispositif d'aspiration par le plus court chemin, mais sont au contraire entrainés dans le mouvement de rotation de façon que leur temps de séjour moyen dans la zone de revêtement du substrat soit allongée et qu'elles balaient plusieurs fois la surface dudit substrat, ce qui augmente fortement leur probabilité de dépôt.

Pour permettre au(x) tourbillon(s) de se former, la zone de revêtement est de grande dimension et plusieurs injections de gaz chauds sont effectués dans ladite zone pour que le substrat, sur toute la longueur de ladite zone soit à une température suffisante afin d'autoriser la pyrolyse du composé pulvérulent à son contact.

Cependant, pour certains produits pulvérulents plus particulièrement, on observe que la couche mince formée présente un certain voile, c'est-à-dire que l'image d'objets réfléchie ou transmise par le verre revêtu de sa couche mince semble perçue à travers un voile. Des études laissent penser que ce voile est dû à des particules de produit pulvérulent situées de part et d'autre du jet principal de produit pulvérulent issu de la buse de distribution, décomposées dans l'atmosphère à température élevée de la zone de revêtement et incorporées dans la couche formée.

Souvent ces fines particules présentes dans la zone de dépôt sont chassées du substrat, au passage sous la buse de distribution par l'effet combiné du jet de poudre et gaz mélangés et par l'effet de souffle résultant de la décomposition rapide des grains de poudre ; mais il arrive que certaines poudres ne génèrent pas un effet de souffle suffisant, d'où un voile sur la couche formée.

La présente invention vise à supprimer ou tout du moins à réduire ce voile qui apparait parfois sur les couches minces déposées sur des substrats tels que le verre, obtenues par pyrolyse de composés métalliques pulvérulents, par exemple à base d'étain, et/ou d'indium, notamment des composés en poudre à base d'oxyde de dibutylétain (DBTO), de difluorure de dibutyl étain (DBTF), de formiate d'indium, etc.

Elle propose pour cela de distribuer sur des substrats à revêtir portés à haute température, à partir d'une buse à fente, un produit en poudre décomposable à la chaleur, en suspension dans un gaz et d'admettre à proximité du jet de mélange de poudre et de gaz, au moins un courant de gaz froid, et en général non chauffé, et d'aspirer directement la poudre extérieure au jet issu de la buse et non captée par le substrat.

Avantageusement, l'invention propose également de favoriser la circulation et l'évacuation directe des particules de poudre non immédiatement captées par le substrat et extérieures au jet issu de la buse, en disposant des déflecteurs près du nez de buse, évitant ainsi la formation de tourbillons.

Avantageusement, l'invention propose une double aspiration proche du substrat.

L'invention propose également une chambre de revêtement comprenant une buse de distribution terminée par une fente et projetant sur un substrat notamment en verre, un mélange de poudre et de gaz, des moyens d'aspiration encadrés par des rampes de soufflage de gaz chaud, ladite chambre comprenant en outre des amenées de gaz froid de chaque côté de la fente de distribution de la buse, et les moyens d'aspiration étant disposés à proximité de la buse et du substrat de façon à aspirer directement la poudre non captée par ledit substrat.

De préférence, pour éviter tout tourbillon de poudre non captée par le substrat, la chambre de dépôt possède des déflecteurs, tels des barres, placées parallèlement à la fente de distribution sur toute sa longueur et à sa proximité.

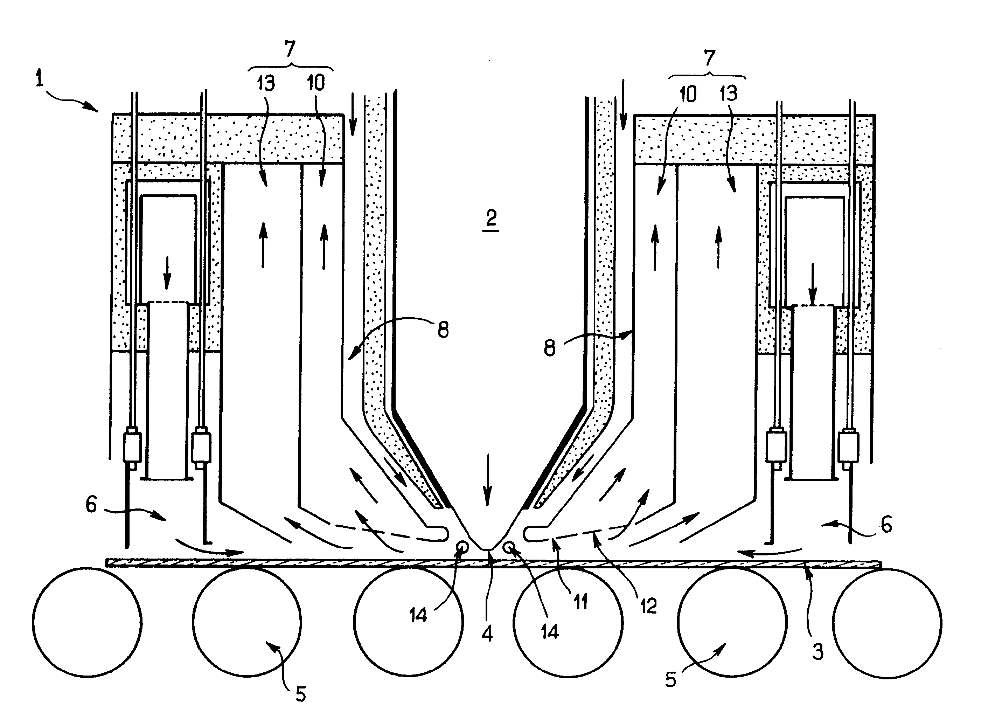

L'invention sera maintenant décrite plus en détail en référence à la figure unique jointe qui représente une chambre de revêtement d'un ruban de verre à partir de composés en poudre.

Il est apparu que le revêtement de bonne qualité n'était dû qu'au dépôt sur le substrat de la poudre directement issue de la fente de distribution de la buse, c'est-à-dire contenue dans le jet principal de poudre et de gaz issu de ladite fente. La poudre non directement issue de la buse, qui se disperse latéralement, susceptible de se décomposer dans l'atmosphère chaude de la chambre de revêtement, ne doit pas, ou pratiquement pas, dans la conception selon l'invention participer à la formation de la couche.

Pour éviter que cette portion de poudre n'appartenant pas au jet principal directement issu de la fente de distribution, mais appartenant au contraire à ce que nous appellerons le jet d'écoulement latéral, ne se décompose et ne constitue des fines particules susceptibles de s'incorporer à la couche formée par de la poudre du jet principal, l'invention propose d'empêcher sa décomposition en fines particules génératrices de voile et de l'éliminer rapidement.

Le procédé pour obtenir cela est expliqué ci-après en liaison avec la description du matériel conçu dans ce but.

La chambre de revêtement 1 montrée sur la figure comprend essentiellement une buse 2 de projection de poudre et de gaz mélangés, terminée dans sa partie basse effilée en regard du substrat 3 à revêtir par une fente longitudinale 4. Cette buse 2 ne sera pas décrite ici, elle a fait l'objet d'un brevet publié en Europe sous le numéro 125 153, brevet auquel il conviendra de se reporter pour plus de détail sur la buse.

Elle distribue un jet principal de poudre et de gaz présentant une énergie importante. Cette énergie importante concourt à l'obtention d'une couche de revêtement de bonne qualité, adhérant parfaitement bien au substrat.

Le substrat 3 est par exemple un ruban de verre fabriqué par le procédé float, défilant en regard de la buse 2 en étant transporté sur des rouleaux 5. Le substrat 3 lorsqu'il est en verre est à une température de l'ordre de 600°C.

Comme connu, la chambre de revêtement 1 est encadrée en amont et en aval de la buse 2 par des rampes 6 de soufflage de gaz chaud, l'amont et l'aval étant déterminés en fonction du sens d'avancement du ruban de verre à revêtir. Ces rampes 5 soufflent leur gaz chaud à proximité de la surface du substrat 3.

Comme connu, la chambre de revêtement 1 possède aussi des moyens d'aspiration 7 destinés à évacuer les produits pulvérulents non retenus sur le substrat. La chambre 1 selon l'invention comprend en outre des amenées 8 de gaz, en général de l'air, froid c'est-à-dire non chauffé, de chaque côté de la buse 2, débouchant à proximité de la fente de projection 4.

Ces amenées 8 sont en communication avec l'atmosphère ambiante, ou si désiré, avec des chambres d'atmosphère contrôlée non représentées. Le jet de gaz et de poudre sortant avec énergie de la fente 4, aspire l'atmosphère avoisinante et en particulier favorise la circulaiton d'air ou de gaz induit par les amenées 8. Cet air (ou gaz) introduit aux abords du jet principal issu de la fente 4 ne perturbe pas ledit jet, mais il en refroidit le voisinage immédiat évitant ainsi que la poudre échappée du jet principal et dispersée latéralement dans ce que nous avons appelé le jed d'écoulement latéral distribué en amont et en aval de la buse 2, ne se décompose sous l'effet de la chaleur.

Cette poudre appartenant au jet d'écoulement latéral est ensuite évacuée de la chambre de revêtement aussi vite et aussi directement que possible pour éviter qu'elle ne vienne participer à la formation de la couche de revêtement d'une part, pour éviter qu'elle ne vienne se déposer et s'accumuler sur les parois de l'installation, d'autre part, les souillant et risquant de se décrocher par la suite pour venir former des défauts sur la couche de revêtement.

Les moyens d'aspiration 7 évoqués précédemment sont disposés et conformés de façon à réaliser cette évacuation de la poudre non captée par le substrat, de façon rapide et directe.

Ils sont placés de façon à aspirer à proximité du nez de la buse 2, ne laissant ainsi pas d'espacement où la poudre pourrait se déposer et/ou former des tourbillons.

Pour garantir une meilleure évacuation de la poudre non utilisée, un double niveau d'aspiration est créé de chaque côté du jet principal. Un premier caisson d'aspiration 10 est situé tout près de la buse 2 et descend aux abords du substrat 3, approximativement au même niveau que le nez de la buse. Il communique avec la zone de revêtement par des orifices 11 percés au travers d'une paroi 12 fermant le caisson 10 vers le bas, cette parois 12 présentant une faible inclinaison par rapport au plan du substrat, un point de cette paroi 12 étant d'autant plus proche du substrat qu'il est plus près de la buse.

Compte tenu de la symétrie de l'installation, le plan de symétrie passant par la buse et plus précisément par la fente 4, deux caissons 10 sont placés parallèlement à la buse 2, l'un en amont, l'autre en aval.

Le second niveau d'aspiration est constitué par des seconds caissons 13, plus éloignés de la buse que les caissons 10.

En outre, des déflecteurs 14, tels par exemple que des barres cylindriques peuvent être ajoutés à proximité du nez de buse, pour favoriser la circulation et l'évacuation sans tourbillons, de la poudre non utilisée, vers les caissons d'aspiration 10 et 13.

Ces déflecteurs sont avantageusement disposés sur toute la longueur de la fente 4 notamment, parallèlement à ladite fente 4.

Par ailleurs, les bas parois des caissons d'aspiration et en particulier la liaison du bas de caisson 10 avec la paroi inclinée 12 sont profilés pour favoriser l'écoulement et l'aspiration directe de la poudre non captée par le substrat.

Ainsi, le surplus de poudre non capté par le substrat, contenu dans les jets d'écoulement latéraux sont refroidis par l'air (ou le gaz) induit véhiculé par les amenées 8. Cette poudre est en outre soumise à l'action des moyens d'aspiration 7 (caissons 10 et 13) ; elle s'y dirige par un trajet direct, les orifices 11 au travers de la paroi 12 et l'aspiration au travers desdits orifices, ainsi que les éventuels déflecteurs 14 empêchent toute formation de tourbillons.

En outre, les gaz chauds introduits par les rampes 6 empêchent un trop grand débit pouvant entraîner le refroidissement du verre, et être préjudiciable à la pyrolyse de la poudre sur le substrat et donc à la qualité de la couche et au rendement de la pyrolyse.

Ces gaz chauds injectés au contact du verre aident bien à maintenir le verre chaud, voire même à le réchauffer, et ils favorisent également la séparation des courants de poudre aspirés, vis à vis de la surface du verre.

Les débits d'aspiration et de soufflage de gaz chauds peuvent être ajustés aux valeurs désirées.

La longueur d'une telle chambre de revêtement est réduite par rapport à la longueur d'une chambre de l'art antérieur, d'où moins de possibilités pour la poudre non contenue dans le jet principal et/ou non captée par le substrat de venir en contact avec ledit substrat, de s'y déposer et former un voile.

## Revendications

1. Procédé de revêtement d'un substrat, tel un ruban de verre, dans lequel une buse de distribution se terminant par une fente, projette sur ledit substrat chaud, un courant gazeux mélangé avec un produit pulvérulent qui se décompose à la chaleur et en particulier au contact du substrat chaud pour y former une couche de revêtement, caractérisé en ce qu'au moins un courant de gaz froid, et en général non chauffé, est admis à proximité du jet de mélange de produit pulvérulent et de poudre issu de la buse, et en ce que le produit pulvérulent extérieur au jet issu de la buse et non capté par le substrat est aspiré directement.

2. Procédé selon la revendication 1 caractérisé en ce qu'une pluralité de niveaux d'aspiration sont prévus, tous agissant à proximité de la surface du substrat.

3. Procédé selon l'une des revendications 1 ou 2, caractérisé en ce qu'on favorise la circulation directe du produit pulvérulent non immédiatement capté par le substrat et extérieur au jet issu de la buse et en ce qu'on évite la formation de tourbillons, en disposant des déflecteurs près du nez de buse.

4. Procédé selon l'une des revendications précédentes, caractérisé en ce qu'on forme la couche de revêtement sur le substrat uniquement avec du produit pulvérulent appartenant au jet issu de la buse.

5. Procédé selon l'une des revendications précédentes caractérisé en ce que du gaz chaud est injecté dans la zone de revêtement, en limite de cette zone, au niveau du substrat.

6. Chambre de revêtement comprenant une buse de distribution terminée par une fente et projetant sur un substrat, notamment en verre, un mélange de produit pulvérulent et de gaz, des moyens d'aspiration encadrés par des rampes de soufflage de gaz chaud, caractérisée en ce qu'elle comprend en outre des amenées (8) de gaz froid de chaque côté de la fente (4) de distribution de la buse (2) et en ce que les moyens d'aspiration (7) sont disposés à proximité de la buse (2) et du substrat (3) de façon à aspirer directement le produit pulvérulent non capté par ledit substrat (3).

7. Chambre de revêtement selon la revendication 6 caractérisée en ce qu'elle possède de déflecteurs (14), tels des barres, notamment cylindriques, placées parallèlement à la fente de distribution (2) sur toute sa longueur et à sa proximité.

8. Chambre de revêtement selon l'une des revendications 6 ou 7 caractérisée en ce qu'elle possède de chaque côté de la buse au moins un caisson (10) d'aspiration agissant à proximité à la fois du nez de buse (2) et de la surface du substrat (3) aspirant directement du produit pulvérulent non capté par le substrat (3).

9. Chambre de revêtement selon la revendication 8, caractérisée en ce que le caisson d'aspiration (10) possède une paroi d'entree (12) légèrement oblique par rapport au substrat (3) plus près du substrat du côté le plus proche de la buse, percée d'orifices (11) au travers desquels s'exerce l'aspiration.

10. Chambre de revêtement selon l'une des revendications 8 ou 9 caractérisé en ce que deux caissons (10 - 13) d'aspiration sont prévus.

## Patentansprüche

1. Verfahren zum Beschichten eines Substrats, beispielsweise Glasband, wobei eine in einem Schlitz endende Verteilerdüse über das erwärmte Substrat einen Gasstrom sprüht, der mit einem pulverisierten Werkstoff vermischt ist, welcher sich in der Wärme und insbesondere bei Berührung mit dem erwärmten Substrat zersetzt und dort eine Überzugsschicht bildet, **dadurch gekennzeichnet, daß** wenigstens ein kalter und im allgemeinen nicht erwärmter Gasstrom in der Nähe des aus der Düse abgegebenen Strahls aus dem Gemisch aus pulverisiertem Werkstoff und dem Pulver zugeführt wird, und daß das das sich außerhalb des aus der Düse abgegebenen Strahls befindende pulverförmige Material, das nicht von dem Substrat aufgenommen wurde, direkt abgesaugt wird.

2. Verfahren nach Anspruch 1, **dadurch gekennzeichnet, daß** verschiedene Absaugebenen vorgesehen sind, die alle in der Nähe der Substratoberfläche wirksam sind.

3. Verfahren nach einem der Ansprüche 1 oder 2, **dadurch gekennzeichnet, daß** die direkte Zirkulation des von dem Substrat nicht sofort aufgenommenen und sich außerhalb des aus der Düse abgegebenen Strahls befindenden pulverisierten Werkstoffs bevorzugt wird, und daß die Bildung von Wirbeln dadurch vermieden wird, daß nahe des Düsenmundstücks Umlenkelemente vorgesehen sind.

4. Verfahren nach einem der vorhergehenden Ansprüche, **dadurch gekennzeichnet, daß** die Überzugsschicht auf dem Substrat nur aus dem pulverisiertem Werkstoff, der in dem aus der Düse abgegebenen Strahl enthalten ist, gebildet wird.

5. Verfahren nach einem der vorhergehenden Ansprüche, **dadurch gekennzeichnet, daß** das erwärmte Gas an der Zonengrenzlinie auf der Höhe des Substrats in die Überzugszone eingesprüht wird.

6. Beschichtungskammer mit einer Verteilerdüse, die in einem Schlitz endet und eine Mischung aus einem pulverisiertem Werkstoff und aus Gas auf ein Substrat, insbesondere aus Glas, sprüht, mit Absaugvorrichtungen, die von Treibgas-Blaseinrichtungen eingefaßt sind, **dadurch gekennzeichnet, daß** sie weiterhin Zuleitungen (18) für kaltes Gas auf jeder Seite des Schlitzes (4) der Verteilerdüse (2) aufweisen, und daß die Absaugvorrichtungen (7) derart in der Nahe der Düse (2) und des Substrats (3) angeordnet sind, daß sie das vom Substrat (3) nicht aufgenommene pulverisierte Material direkt absaugen.

7. Beschichtungskammer nach Anspruch 6, **dadurch gekennzeichnet, daß** sie Deflektoren (14), beispielsweise Stabelemente, insbesondere zylindrische, die parallel zum Verteilerschlitz (2) auf seine gesamten Länge und in seiner Nahe angeordnet sind, aufweist.

8. Beschichtungskammer nach einem der Ansprüche 6 oder 7, **dadurch gekennzeichnet, daß** sie auf jeder Seite der Düse wenigstens einen Absaugkasten (10) aufweist, der in der Umgebung sowohl der Düsenspitze (2) wie auch der Substratoberfläche (3) das von dem Substrat (3) nicht aufgenommene pulverisierte Material absaugt.

9. Beschichtungskammer nach Anspruch 8, **dadurch gekennzeichnet, daß** der Absaugkasten (10) eine bezüglich des Substrats (3) leicht schräge Eingangswand (12) aufweist, die auf der näher an der Düse befindlichen Seite näher am Substrat ist und mit Durchgangsöffnungen (11) versehen ist, durch die hindurch das Absaugen durchgeführt wird.

10. Beschichtungskammer nach einem der Ansprüche 8 oder 9, **dadurch gekennzeinet, daß** zwei Absaugkästen (10 - 13) vorgesehen sind.

## Claims

1. Method of coating a substrate, such as a band of glass, in which a distribution nozzle terminating in a slot projects, onto said hot substrate, a gaseous current mixed with a pulverulent product which decomposes with heat and, in particular, on contact with the hot substrate to form there a coating film, characterized in that at least one current of cold gas, and in general unheated gas, is admitted into proximity of the mixing jet for pulverulent product and powder issuing from the nozzle, and in that the pulverulent product outside the jet issuing from the nozzle and not captured by the substrate is directly sucked away.

2. Method according to Claim 1, characterized in that a plurality of suction levels are provided, all acting in proximity to the surface of the substrate.

3. Method according to one of Claims 1 or 2, characterized in that the direct flow of the pulverulent product not immediately picked up by the substrate and outside the jet issuing from the nozzle is promoted and that the forming of vortices is avoided by disposing deflectors near the nozzle nose.

4. Method according to one of the preceding Claims, characterized in that the coating film is formed on the substrate solely with the pulverulent product forming part of the jet issuing from the nozzle.

5. Method according to one of the preceding Claims, characterized in that hot gas is injected into the coating zone, at the limit to this zone, at the level of the substrate.

6. Coating chamber comprising a distribution nozzle terminating in a slot and projecting, onto a substrate, notably of glass, a mixture of pulverulent product and gas, suction means framed by blowing pipes for hot gas, characterized in that the chamber comprises, in ambition, feeds (8) for cold gas on each side of the distribution slot (4) of the nozzle (2) and in that the suction means (7) are disposed in proximity to the nozzle (2) and to the substrate (3) in such a way as to suck directly the pulverulent product not captured by said substrate (3).

7. Coating chamber according to Claim 6, characterized in that it possesses deflectors (14), such as bars, notably cylinders, placed parallel to the distribution slot (2) along its entire length and in proximity to it.

8. Coating chamber according to one of Claims 6 or 7, characterized in that it possesses, on each side of the nozzle, at least one suction chest (10) acting in proximity both to the nozzle nose (2) and to the surface of the substrate (3), sucking away directly pulverulent product not captured by the substrate (3).

9. Coating chamber according to Claim 8, characterized in that the suction chest (10) has an inlet wall (12) slightly oblique with respect to the substrate (3) and nearer the substrate on the side nearer to the nozzle, the wall being perforated by orifices (11), through which the suction acts.

10. Coating chamber according to one of Claim 8 or 9, characterized in that two suction chests (10 - 13) are provided.